# EUROPÄISCHE PATENTSCHRIFT

(11) **EP 3 055 624 B1**
(45) Veröffentlichungstag und Bekanntmachung des Hinweises auf die Patenterteilung: **21.11.2018**
(21) Anmeldenummer: 14777061.4
(22) Anmeldetag: 25.09.2014
(51) Int. Cl.: F24F 13/08, B60H 1/00, B60H 1/34, F24F 13/06

(54) **LUFTAUSSTRÖMER**
AIR VENT
DIFFUSEUR D'AIR

(30) Priorität: 09.10.2013 DE 102013111175
(43) Veröffentlichungstag der Anmeldung: 17.08.2016
(73) Patentinhaber: Dr. Schneider Kunststoffwerke GmbH, 96317 Kronach (DE)
(72) Erfinder: GRÜNBECK, Thomas, 96358 Teuschnitz (DE); EBERTSCH, Reinhard, 96349 Steinwiesen (DE)
(86) Internationale Anmeldenummer: PCT/EP2014/070537
(87) Internationale Veröffentlichungsnummer: WO 2015/052012

(56) Entgegenhaltungen:
- EP-A1- 2 119 581
- JP-A- S54 108 323
- JP-U- S60 182 641
- US-A- 4 989 807

## Beschreibung

Die vorliegende Erfindung betrifft einen Luftausströmer, aufweisend ein Gehäuse mit einer Luftaustrittsöffnung, einem Luftzuführkanal und einem durchgehenden Strömungskanal. Derartige Luftausströmer werden beispielsweise bei Kraftfahrzeugen zum Zuführen von Luft und zum Einstellen der Richtung der ausströmenden Luft sowie der Menge der ausströmenden Luft eingesetzt.

Herkömmliche Luftausströmer weisen sowohl vertikal als auch horizontal verlaufende Lamellen auf, die in einem Strömungskanal angeordnet sind. Diese Lamellen können über eine Einrichtung sowohl vertikal als auch horizontal verschwenkt werden, um die Richtung der ausströmenden Luft zu beeinflussen. Derartige Luftausströmer weisen in der Regel einen rechteckigen oder runden Querschnitt auf.

Darüber hinaus sind Luftausströmer mit einem im Wesentlichen runden Querschnitt bekannt. Diese können ebenso Lamellen aufweisen, wobei die Lamellen oftmals in einem Ring gelagert sind und die Richtung der ausströmenden Luft durch das Drehen des Rings und Verschwenken der darin gelagerten Lamellen erfolgt.

Aus dem Stand der Technik sind ferner Luftausströmer bekannt, die Mittel aufweisen, welche eine Abrisskante für einen Luftstrom bilden. DE 10 2010 049 110 A1 offenbart eine Luftverteilvorrichtung für ein Kraftfahrzeug. Die Luftverteilvorrichtung weist eine Luftausströmöffnung und ein Luftleitelement auf, über welches die Luftausströmrichtung eines aus dieser Luftausströmöffnung austretenden Luftstrahls veränderbar ist. Das Luftleitelement ist über Antriebelemente periodisch schwenkend bewegbar, wobei das Luftleitelement als inneres Bauteil der Luftleitvorrichtung ausgebildet ist. Die Luftleitvorrichtung weist ferner eine Prallwand auf, die einer Stauklappe im Strömungsquerschnitt des Luftkanals gegenüberliegt und in Strömungsrichtung zur Stauklappe stromaufwärts versetzt angeordnet ist. Durch einen Unterdruck, der sich im Nachlaufgebiet dieser Prallwand einstellt, wird die durch die ausgestellte Stauklappe bewirkte seitliche Ablenkung eines Luftstrahls unterstützt.

DE 100 63 189 B4 offenbart eine Belüftungsvorrichtung mit einem in einer Richtung luftdurchströmten Kanal, der eine Luftaustrittsöffnung und innerhalb des Kanals einander paarweise gegenüberliegende, steuerbare Luftleitelemente zum Ablenken des Luftstroms aufweist. Ein erstes Luftleitelement zum Ablenken des Luftstroms ist in Richtung von der Kanalwand weg und ein zweites dem ersten Luftleitelement gegenüberliegendes Luftleitelement zum Ablenken des Luftstroms ist in Richtung zur Kanalwand hin ausgebildet. Die Luftleitelemente in der Kanalwand sind an die Kanalwand anschließend gelagert und das zweite Luftleitelement ist zum Ablenken des Luftstroms auf Grund des Coanda-Effekts ausgebildet. Hierzu ist das zweite Luftleitelement gegenüber dem ersten Luftleitelement in Kanallängsrichtung zum Kanalinneren hin versetzt angeordnet, wobei sich ein stromabwärts an der Kanalwand angeordnetes Unterdruckgebiet ausbildet.

DE 34 37 259 C2 offenbart eine Belüftungsvorrichtung mit einer Vielzahl von nebeneinander anliegenden Lamellen, welche einen sogenannten Coanda-Effekt ausnutzen. Die Lamellen sind in einem Lüftungskanal ortsfest entlang einer fest verriegelten Kurve angeordnet und drehbar gelagert. Sie werden so angesteuert, dass jede Lamelle einen unterschiedlichen Winkel zu der anströmenden Luft einnimmt. Zur Einstellung eines großen Ausströmwinkels wird eine Hälfte der Luftdüse durch die in dieser Hälfte liegenden Lamellen so verschlossen, dass die Lamellen eine konvex gewölbte Kurve bilden. In Folge des Coanda-Effekts wird der Luftstrom entlang dieser konvexen Kurve geleitet und entsprechend abgelenkt.

JP S54 108323 A offenbart einen Luftausströmer, der an einem Fahrzeugdach angeordnet ist und eine Luftschwingung bereitstellt. Zur Bereitstellung der Luftschwingung sind zwei gekrümmte Bereiche vorgesehen, die den Querschnitt eines Luftkanals zu einem Luftaustrittsabschnitt vergrößern, wobei der Querschnitt des Luftkanals von einem Luftzuführkanal verkleinert ist. Hierzu sind dem Luftzuführkanal zugewandte Begrenzungswände lotrecht zu dem Luftzuführkanal angeordnet. Die Begrenzungswände ragen zudem weiter in den Luftzuführkanal hinein als die beabstandet zu diesen angeordneten gekrümmten Bereiche im Luftkanal. Zwischen den Begrenzungswänden und den gekrümmten Bereichen besteht ein Abstand, wobei in diese so gebildeten Bereiche Luft abwechselnd zugeführt wird.

US 4,989,807 A offenbart einen S-förmigen Triebwerkeingangs-Diffusor, wobei in dem Diffusor ein Umlenkblech und eine Öffnung vorgesehen sind. Über die Öffnung kann Luft abgesaugt oder zugeführt werden.

Der Nachteil bei den aus dem Stand der Technik bekannten Luftausströmern liegt in der Verwendung von Lamellen oder anderen Ablenkmitteln, welche bewegt werden müssen. Eine Bewegung von Komponenten einer Einrichtung umfasst stets das Risiko, dass es zu einem Versagen oder einer Störung auf Grund einer Beschädigung oder eines Ausfalls von Komponenten dieser Einrichtungen kommt. So könnten beispielsweise Lamellen nach häufigem Verschwenken klemmen oder das Einstellmittel, welches oftmals auf einer sogenannten Steuerlamelle gelagert ist, nur noch schwer bewegt werden.

Vorteilhafte Weiterbildungen der Erfindung sind in den Unteransprüchen im Detail angegeben.

Ein erfindungsgemäßer Luftausströmer weist ein Gehäuse mit einer Luftaustrittsöffnung, einen ersten Anschluss an einen Luftzuführkanal und einen durchgehenden Strömungskanal auf, wobei der Strömungskanal mindestens an zwei gegenüberliegenden Abschnitten derart gekrümmt ausgebildet ist, dass sich der Querschnitt des Strömungskanals zu der Luftaustrittsöffnung hin vergrößert und die mindestens zwei Abschnitte jeweils Öffnungen aufweisen, welche jeweils in eine hinter den Abschnitten liegende Kammer münden, wobei die Kammern jeweils einen von dem ersten Anschluss getrennten zweiten Anschluss zum Zuführen oder Abführen von Luft zur Erzeugung von Überdruck und/oder Unterdruck aufweisen, und wobei die Abschnitte mehrere Reihen von Öffnungen aufweisen.

Bei dem erfindungsgemäßen Luftausströmer wird Frischluft oder Luft von einer Klimaanlage über den ersten Anschluss von einem Luftzuführkanal durch den Strömungskanal hindurchgeleitet. Der Strömungskanal ist so ausgebildet, dass die Luft an den gekrümmten Abschnitten entlang dieser aus der Luftaustrittsöffnung ausströmt und die durch die gekrümmte Ausbildung bewirkte Strömung auf Grund des Coanda-Effekts beibehält, so dass der Luftstrom abgelenkt wird. Um eine Einstellung der Luftausströmrichtung zu bewirken, wird in die hinter den Abschnitten gelegenen Kammern über die zweiten Anschlüsse Luft zugeführt oder Luft abgeführt, wobei sich an den Abschnitten Überdruck- und/oder Unterdruckbereiche einstellen. Diese Überdruck- und/oder Unterdruckbereiche bewirken eine Änderung der Richtung der ausströmenden Luft. So kann durch Erzeugung eines Überdrucks in beiden gegenüberliegenden Abschnitten ein im Wesentlichen geradliniger Luftstrom aus dem Luftausströmer eingestellt werden. Wird in beiden gegenüber liegenden Kammern der Abschnitte ein Unterdruck erzeuge, so wird die Luft starker abgelenkt, so dass sich ein dif so wird die Luft stärker abgelenkt, so dass sich ein diffuser Luftstrom einstellt. Wird bei zwei gegenüberliegenden Kammern in einer Kammer ein Überdruck und in der anderen Kammer ein Unterdruck erzeugt, so erfolgt eine Ablenkung des Luftstroms in Richtung des Abschnitts, in dessen Kammer der Unterdruck erzeugt wird.

Der erfindungsgemäße Luftausströmer weist keine mechanischen Luftleitelemente im Sichtbereich auf, die eine Veränderung der Richtung der ausströmenden Luft bewirken. Dadurch ergeben sich ein optisch ansprechendes Erscheinungsbild und eine große Design-Freiheit. Darüber hinaus benötigt ein derartiger Luftausströmer weniger Bauraum als konventionelle Luftausströmer, die neben den Lamellen noch Einrichtungen zum gleichzeitigen Verschwenken einer Gruppe von Lamellen (z. B. Koppelstange) und mechanische Einstellmittel zum Verschwenken der Lamellen aufweisen. Bei der vorliegenden Erfindung wird die zum Ausströmen vorgesehene Luft über den Luftzuführschacht zugeführt. Die Änderung der Ausströmrichtung erfolgt über die zweiten Anschlüsse und eine Luftzu- bzw. Luftabfuhr aus den jeweiligen Kammern der gekrümmten Abschnitte. Zum Einstellen der Ablenkung der aus dem Luftausströmer ausströmenden Luft können Mittel vorgesehen sein, welche mechanisch, elektrisch oder anderweitig die Luftzu- und Luftabfuhr aus den Kammern zum Einstellen der Luftausströmrichtung bewirken. Jedoch ragen in den Luftzuführschacht, den durchgehenden Strömungskanal und die Luftaustrittsöffnung keine Komponenten, welche zusätzlich eine ungewünschte Verwirbelung bewirken. Die Einstellung der ausströmenden Luft erfolgt nur durch zusätzliches Einbringen von Luft durch die Öffnungen einer Kammer (Überdruck) oder durch Absaugen der ausströmenden Luft durch die Öffnungen einer Kammer (Unterdruck). Auf Grund der Ausbildung von Überdruck bzw. Unterdruck in den Kammern und der gekrümmten Ausführung der Abschnitte durch Ausnutzung des Coanda-Effekts wird eine einfache und störungsunanfällige Ausführung eines Luftausströmers bereitgestellt.

Zur Zu- oder Abfuhr der Luft über die zweiten Anschlüsse der Kammern kann eine Einrichtung vorgesehen sein, die im Sinne eines Kompressors oder einer Pumpe Luft einbläst oder absaugt. In Abhängigkeit der Krümmung der Abschnitte sowie dem Querschnitt des Strömungskanals können verschiedene Ablenkungen der ausströmenden Luft eingestellt werden. Ferner kann Über die Einstellung des Unter- bzw. Überdrucks der Grad der Ablenkung der ausströmenden Luft maßgeblich beeinflusst werden.

Gesteuert werden kann der Luftausströmer sowie die Zu- und Abfuhr der Luft zur Erzeugung von Überdruck und Unterdruck über ein mechanisches Einstellmittel (z. B. Joystick) oder eine Eingabe mittels eines Displays.

Das Gehäuse des Luftausströmers kann auch vier gekrümmte Abschnitte mit Öffnungen aufweisen, wobei sich jeweils zwei Abschnitte gegenüberliegen und die vier Abschnitte im Wesentlichen einen im Querschnitt rechteckigen Strömungskanal bilden und jeder Abschnitt eine separate Kammer mit einem zweiten Anschluss zum Zuführen oder Abführen von Luft aufweist. Durch die vier gekrümmten Abschnitte kann die Luft sowohl horizontal als auch vertikal in beide Richtungen abgelenkt und zudem horizontal und vertikal abgelenkt werden. Beispielsweise können zwei aneinanderliegende Abschnitte mit einem Überdruck beaufschlagt und die anderen beiden Abschnitte mit einem Unterdruck beaufschlagt werden, so dass sich eine Ausströmungsrichtung nach unten und in eine seitliche Richtung einstellt. In Abhängigkeit der Stärke des ausgebildeten Überdrucks in den beiden Überdruck-Kammern kann eine Richtung stärker eingestellt werden als die andere. Dazu wird über die zweiten Anschlüsse dieser Kammern nicht im gleichen Maße ein Überdruck erzeugt, sondern in Abhängigsprechendes gilt für die Ausbildung des Unterdrucks über die entsprechenden Kammern der Abschnitte.

Die Öffnungen können zu der Luftaustrittsöffnung hin einen zunehmend größeren Durchmesser aufweisen. Dadurch wird die Ablenkung der ausströmenden Luft verbessert. Beispielsweise ist eine erste Reihe direkt nach dem Luftzuführkanal angeordnet und weitere darauf folgende Reihen erstrecken sich in Richtung der Luftaustrittsöffnung, wobei der Durchmesser der Öffnungen mit jeder Reihe zu der Luftaustrittsöffnung hin zunimmt.

Die Öffnungen können beispielsweise einen runden, eckigen, ovalen oder auch anderweitigen Querschnitt aufweisen. Ferner ist die Größe der Öffnungen in Abhängigkeit der Dimensionierung des Luftausströmers sowie des Grads der Ablenkung zu bemessen.

Insbesondere können die Abschnitte in weiteren Ausführungsformen des Luftausströmers eine konvexe Krümmung aufweisen. Eine konvexe Krümmung stellt beispielsweise bei einem ausströmenden Luftstrom ohne die Ausbildung eines Über- oder Unterdrucks in den Kammern eine diffuse Luftzufuhr bereit.

In weiteren Ausführungsformen weisen die Öffnungen einen im Wesentlichen runden Querschnitt auf.

Der Strömungskanal kann auch eine gerade Anzahl von Abschnitten mit Öffnungen aufweisen, welche im Wesentlichen einen im Querschnitt runden Strömungskanal bilden, wobei jeder Abschnitt eine separate Kammer mit einem zweiten Anschluss zum Zuführen oder Abführen von Luft aufweist. Darüber hinaus ist es möglich, sämtliche Querschnittsformen für den Strömungskanal vorzusehen. Entsprechend der gewählten Querschnittsformen sind dann entsprechende Ab schnitte mit dahinterliegenden Kammern vorzusehen. Auch kann beispielsweise eine ungerade Zahl von Abschnitten und damit eine ungerade Anzahl von Kammern ausgebildet werden. Entscheidend hierbei ist, dass jede Kammer einen separaten zweiten Anschluss zum Zuführen oder Abführen von Luft aufweist.

Der Luftausströmer kann eine die Luftaustrittsöffnung umgebende Blende aufweisen, welche in dem an der Luftaustrittsöffnung anliegenden Bereich eine den Abschnitten entsprechende Krümmung aufweist. Dadurch wird die Ablenkung der ausströmenden Luft durch die Blende nicht behindert, sondern vielmehr unterstützt.

Weiterhin können der Strömungskanal und der Luftzufuhrkanal so ausgebildet sein, dass der Strömungskanal und der Luftzuführkanal im Bereich des ersten Anschlusses einen im Wesentlichen gleichen Querschnitt aufweisen. Dies stellt sicher, dass die ausströmende Luft nicht durch Querschnittsänderungen oder Kanten ungewollt abgelenkt oder verwirbelt wird, was das Einstellen der Richtung der ausströmenden Luft beeinträchtigen würde.

In weiteren Ausführungsformen des Luftausströmers weist der Luftzuführkanal vor dem ersten Anschluss mindestens eine Strecke auf, die einen im Wesentlichen geradlinigen Luftstrom in den Strömungskanal bereitstellt. Diese Maßnahme dient ebenso dazu, das Ablenken der ausströmenden Luft nicht negativ zu beeinflussen.

Die separate Zuführung von Luft in die Kammern der Abschnitte über die zweiten Anschlüsse kann über eine Steuerung einstellbar und veränderbar sein. Eine Steuerung kann beispielsweise mechanisch über eine Bedienkomponente, welche mit weiteren Mitteln zum Zu- und Abführen der Luft zu den zweiten Anschlüssen gekoppelt ist, oder elektrisch erfolgen.

In weiteren Ausführungsformen bestehen die Abschnitte des Strömungskanals mit den Öffnungen aus einem flexiblen Material. Das flexible Material ermöglicht zusätzlich eine leichte Verformung, so dass beim Erzeugen eines Überdrucks in einer Kammer der Abschnitt um ein bestimmtes Maß weit in den Strömungskanal gedrückt wird, wodurch sich eine stärkere Krümmung und damit eine stärkere Ablenkung der ausströmenden Luft einstellt. Ferner kann über die Ausbildung der Abschnitte aus einem flexiblen Material bei Erzeugung eines Unterdrucks in einer Kammer eine Verformung dieses Abschnitts um ein bestimmtes Maß in Richtung der Kammer erfolgen, so dass hierdurch ebenso die Ablenkung der ausströmenden Luft zusätzlich beeinflusst werden kann.

Der Luftausströmer sowie das Gehäuse des Luftausströmers können in weiteren Ausführungen aus Kunststoff bestehen. Insbesondere eignen sich hierzu Kunststoffe, welche zum Spritzgießen der Komponenten des Luftausströmers geeignet sind und entsprechend dem vorgesehenen Einsatz des Luftausströmers die erforderlichen Eigenschaften aufweisen.

Die zweiten Anschlüsse der Kammern können rückseitig, der Luftaustrittsöffnung abgewandt, mit einer Einrichtung zum Zuführen und/oder Abführen von Luft zum Erzeugen eines Überdrucks und/oder Unterdrucks in den Kammern verbunden sein, beispielsweise ist die Einrichtung ein Kompressor oder eine Pumpe, die den Kammern Luft entzieht bzw. zuführt, wobei ferner die Einrichtung mit einem Ventil oder mehreren Ventilen gekoppelt sein kann, welche die Zu- und Abfuhr der Luft steuern. Dazu kann eine elektrische und/oder softwarebedingte Steuerung enthalten sein, die ein Öffnen und Schließen der Ventile, den Betrag des erzeugten Über- bzw. Unterdrucks und den Betrieb der Einrichtung (beispielsweise Kompressor und/oder Pumpe) steuert.

Weiterhin kann an einer die Luftaustrittsöffnung umgebenden Blende ein Einstellmittel angeordnet sein, nach Maßgabe dessen die Richtung, die Ablenkung und/oder die Menge der ausströmenden Luft steuerbar sind. Das Einstellmittel kann mechanisch, wie vorstehend bereits angegeben, die Richtung, die Ablenkung und/oder die Menge der ausströmenden Luft steuern. Darüber hinaus kann das Einstellmittel aber auch elektrisch eine Richtungsänderung, Ablenkung und/oder Mengenregulierung der ausströmenden Luft steuern.

Darüber hinaus kann in dem Luftzuführkanal eine Schließeinrichtung vorgesehen sein, welche dazu ausgebildet ist, die Luftzufuhr in den Strömungskanal freizugeben, zu unterbinden und die Menge der zugeführten Luft zu regulieren. Derartige Schließeinrichtungen werden beispielsweise auch als Drosselklappen bezeichnet.

Hierbei kann die Schließeinrichtung über ein Stellmittel steuerbar sein, welches an einer die Luftaustrittsöffnung umgebenden Blende angeordnet ist. So kann die Schließeinrichtung beispielsweise mit dem Einstellmittel gekoppelt sein oder ein weiteres Mittel weist die Funktionalitäten des Einstellmittels und der Schließeinrichtung auf. Die Schließeinrichtung kann über das Stellmittel elektrisch, mechanisch oder anderweitig gesteuert werden.

Darüber hinaus kann in dem Luftausströmer die Luftzufuhr und die Luftabfuhr in die Kammern regulierbar sein, wobei hierin die Luftzufuhr und die Luftabfuhr steuerbar ist, so dass neben dem Zu- und Abführen von Luft zur Erzeugung eines Überdrucks bzw. eines Unterdrucks auch die Stärke des Drucks bzw. Überdrucks und Unterdrucks gesteuert werden kann.

In weiteren Ausführungsformen sind die Kammern in mindestens zwei Teilkammern unterteilt und weisen entweder jeweils einen separaten zweiten Anschluss oder mindestens ein Trennmittel auf, mittels welchem das Volumen der so gebildeten Teilkammern veränderbar ist. Dadurch kann eine noch feinere Einstellung der ausströmenden Luft erreicht werden. Alternativ können die jeweils einzelnen Abschnitte eine Vielzahl von Kammern aufweisen, die jeweils einen separaten zweiten Anschluss aufweisen oder über ein Trennmittel in ihrem Volumen veränderbar sind.

Weitere Merkmale, Ausgestaltungsmerkmale und Weiterbildungen der Erfindung ergeben sich aus der nachfolgenden, nicht einschränkenden Figurenbeschreibung.

Die in den Figuren gezeigten Ausführungsbeispiele weisen beispielhaften Charakter auf und sind daher nicht einschränkend zu verstehen und können bei zu implementierenden Ausführungsformen vom Veranschaulichten abweichen.

In den Zeichnungen zeigt:
- Fig. 1: eine schematische Darstellung eines Luftausströmers in perspektivischer Ansicht;
- Fig. 2: eine schematische Darstellung eines Luftausströmers in Blickrichtung auf eine Luftaustrittsöffnung;
- Fig. 3: eine schematische Darstellung eines Luftausströmers in einer Seitenansicht;
- Fig. 4: eine schematische Darstellung eines Luftausströmers in Blickrichtung auf einen Anschluss für einen Luftzuführkanal;
- Fig. 5: eine schematische, teilweise geschnittene Darstellung eines Luftausströmers in einer Seitenansicht; und
- Fig. 6: eine weitere schematische, teilweise geschnittene Darstellung eines Luftausströmers in einer Seitenansicht.

In den Figuren entsprechen mit gleichen Bezugszeichen versehene Teile in ihrer Ausgestaltung und Funktion im Wesentlichen einander.

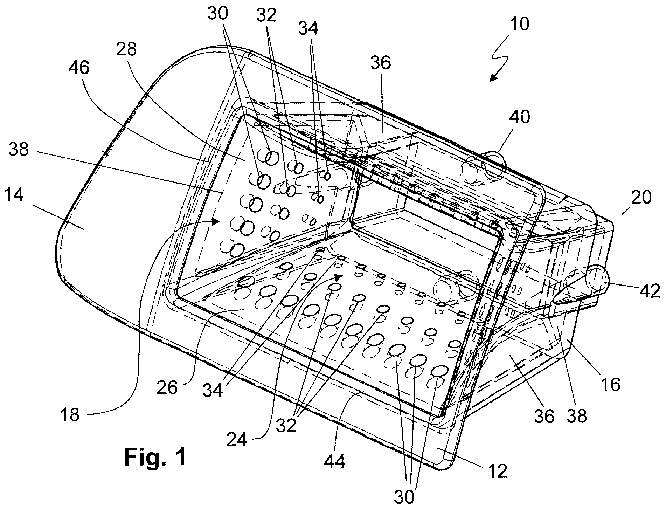

Fig. 1 zeigt eine schematische Darstellung eines Luftausströmers 10 in einer perspektivischen Ansicht, wobei die Bestandteile des Luftausströmers 10 schematisch dargstellt sind.

Der Luftausströmer 10 weist ein Gehäuse 16 auf. An dem Gehäuse 16 ist an einer vorderen Luftaustrittsöffnung 18 eine Blende 12 angeordnet, wobei die Öffnung der Blende 12 im Wesentlichen der Luftaustrittsöffnung 18 des Luftausströmers 10 entspricht. An der Blende 12 ist ferner ein Blendenanschluss 14 angebracht. Vorzugsweise besteht eine die Luftaustrittsöffnung 18 umgebende Blende aus der Blende 12 und dem Blendenanschluss 14, wobei die in Fig. 1 gezeigte Darstellung nur beispielhaft ist. So kann eine Blende sich beispielsweise über ein gesamtes Armaturenbrett bzw. das Verkleidungsteil des Armaturenbretts erstrecken und eine Blende mit mindestens einer Öffnung für einen Luftausströmer 10 bilden.

Das Gehäuse 16 des Luftausströmers 10 weist einen ersten Anschluss 20 auf, der mit einem in Fig. 1 nicht dargestellten Luftzuführkanal 22 verbunden ist. Der erste Anschluss 20 weist einen im Wesentlichen rechteckigen Querschnitt auf und ist mit einem Strömungskanal 24 des Luftausströmers 10 verbunden. Der Strömungskanal 24 weist im Anschlussbereich an den ersten Anschluss 20 einen im Wesentlichen dem ersten Anschluss 20 entsprechenden Durchmesser auf. Der Durchmesser des Strömungskanals 24 vergrößert sich in Richtung zu der Luftaustrittsöffnung 18 hin. Der Strömungskanal 24 weist vier Abschnitte 26 und 28 auf, wobei sich jeweils zwei Abschnitte 26 und 28 gegenüberliegen und der Strömungskanal 24 von den vier Abschnitten 26 und 28 umgeben und durch die Abschnitte 26 und 28 definiert ist.

Die Abschnitte 26 und 28 weisen ferner Öffnungen 30, 32 und 34 auf. In Fig. 1 sind jeweils nur wenige der Öffnungen 30, 32 und 34 angegeben, jedoch entsprechen die anderen, nicht bezeichneten Öffnungen den bezeichneten Öffnungen 30, 32 und 34 in den jeweiligen Reihen.

Der Abschnitt 26 weist, wie gezeigt, drei Reihen von Öffnungen 30, 32 und 34 auf, wobei sich der Durchmesser der Öffnungen 30, 32 und 34 ausgehend vom Verbindungsbereich des Strömungskanals 24 mit dem ersten Anschluss 20 zu der Luftaustrittsöffnung 18 hin vergrößert.

Jeder der Abschnitte 26 und 28 weist eine dahinterliegende Kammer 36 und 38 auf. Über die Öffnungen 30, 32 und 34 besteht eine Verbindung zwischen den Kammern 36, 38 und dem Strömungskanal 24. Die Kammern 36 und 38 weisen jeweils einen zweiten Anschluss 40 und 42 auf. Die beiden gegenüberliegenden Kammern 36 der Abschnitte 26 (in Fig. 1 ist nur der untere Abschnitt 26 dargestellt) weisen jeweils einen separaten zweiten Anschluss 40 auf und die Kammern 38 der Abschnitte 28 weisen jeweils einen zweiten Anschluss 42 auf. Über die zweiten Anschlüsse 40 und 42 kann zur Erzeugung eines Überdrucks oder eines Unterdrucks in den entsprechenden Kammern 36 und 38 sowie in den Bereichen der Abschnitte 26 und 28 mit den Öffnungen 30, 32 und 34 Luft zu- bzw. abgeführt werden.

Die Abschnitte 26 und 28 sind gekrümmt ausgebildet und weisen eine konvexe Krümmung auf, wobei sich mit zunehmendem Abstand zu dem ersten Anschluss 20 der Querschnitt des Strömungskanals 24 vergrößert. Dementsprechend sind auch die Öffnungen 30, 32 und 34 so ausgebildet, dass sich deren Durchmesser in Abhängigkeit des sich vergrößernden Querschnitts des Strömungskanals 24 vergrößert. Die konvexe Krümmung der Abschnitte 26 und 28 bewirkt, dass von dem Luftzuführkanal 22 zugeführte Luft auf Grund des sogenannten Coanda-Effekts entlang der Oberfläche der Abschnitte 26 und 28 strömt und somit in einem bestimmten Maß abgelenkt wird. Um die Ablenkung der ausströmenden Luft in gewünschter Weise zu beeinflussen, wird den zweiten Anschlüssen 40 und 42 Luft zu- oder abgeführt, so dass beispielsweise Luft aus dem unteren Abschnitt 26 aus den Öffnungen 30, 32 und 34 strömt und damit eine Ablenkung des austretenden Luftstroms nach oben in Richtung des gegenüberliegenden Abschnitts 26 bewirkt.

Die über die zweiten Anschlüsse 40 und 42 zugeführte bzw. abgeführte Luft wird über eine weitere Einrichtung eingestellt. Der Luftstrom, welcher über den Luftzuführkanal 22 dem Luftausströmer 10 zugeführt wird, beeinflusst nicht die den Kammern 36 und 38 zugeführte Luft bzw. abgeführte Luft über die Anschlüsse 40 und 42. Es gibt daher einen Luftstrom über den Luftzuführkanal 22, wie bereits von Lamellenströmen aus dem Stand der Technik bekannt, und zusätzlich einen sogenannten Steuerungsluftstrom, welcher beispielsweise von einem Kompressor über ein Ventil oder Schaltmittel gezielt den Anschlüssen 40 und 42 zugeführt wird.

Zusätzlich kann über den Kompressor oder eine weitere Einrichtung auch Luft über die Kammern 36 und 38 abgeführt werden. Über die Öffnungen 30, 32 und 34 wird demnach Luft des ausströmenden Luftstroms durch Ausbildung von Unterdruckbereichen in den entsprechenden Kammern 36 und 38 und den Bereichen der Abschnitte 26 und 28 mit den Öffnungen 30, 32 und 34 entzogen.

Zur Steuerung des ausströmenden Luftstroms kann an dem Blendenanschluss 14 ein nicht dargestelltes Steuerungsteil vorgesehen sein, welches mechanisch die Zu- oder Abfuhr von Luft in die Kammern 36 und 38 oder aus den Kammern 36 und 38 bewirkt. Die Steuerung kann aber auch elektrisch erfolgen, so dass eine Betätigung des Steuermittels eine entsprechende Aktion durch eine Einrichtung zum Zu- und Abführen der Luft regelt. Eine derartige Einrichtung kann aber auch über ein Display eines Kraftfahrzeugs gesteuert werden, worüber sämtliche Einstellungen, beispielsweise auch die einer Klimaanlage, eingestellt werden können.

Der in Fig. 1 dargestellte Luftausströmer 10 bewirkt durch die gezielte Abfuhr von Luft über die zweiten Anschlüsse 40 und 42 aus den Kammern 36 und 38 eine Steuerung des ausströmenden Luftstromes. Zusätzlich kann der Luftzuführkanal 22 eine Drosselklappe oder andere Schließeinrichtungen aufweisen, die ebenso, wie vorstehend beschrieben, gesteuert werden und die Menge der ausströmenden Luft aus dem Luftausströmer 10 einstellen und auch vollständig unterbinden können. Zusätzlich kann über weitere Mittel und Einrichtungen auch die Menge der zu- oder abgeführten Luft aus den Kammern 36 und 38 gesteuert werden, so dass sich darüber auch der Grad der Ablenkung steuern lässt.

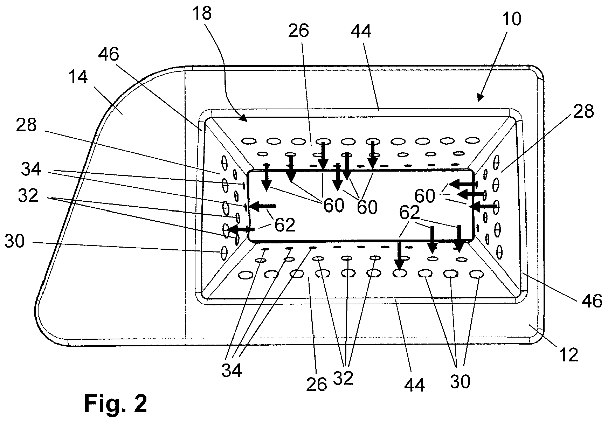

Fig. 2 zeigt eine schematische Darstellung eines Luftausströmers 10 in Blickrichtung auf eine Luftaustrittsöffnung 18. In dieser Darstellung sind eine Blende 12, ein Blendenanschluss 14, abgerundete Bereiche 44 und 46 der Blende 12 sowie jeweils zwei sich gegenüberliegende Abschnitte 26 und 28 des Luftausströmers 10 dargestellt. Die Ausschnitte 26 und 28 weisen jeweils drei Reihen von Öffnungen 30, 32 und 34 auf. Der Durchmesser der Öffnungen 30, 32 und 34 nimmt mit zunehmendem Abstand von der Luftaustrittsöffnung 18 zu dem Luftzuführkanal 22 hin ab. Der Luftausströmer 10 von Fig. 2 stellt eine Draufsicht auf den Luftausströmer 10 von Fig. 1 dar. Daher sind die Abschnitte 26 und 28 gekrümmt ausgebildet und die Bereiche 44 und 46 der Blende 12 weisen eine entsprechende Krümmung auf, so dass der ausströmende Luftstrom nicht durch so gebildete Ablenkkanten umgelenkt oder verwirbelt wird und so dass eine Ablenkung durch die gekrümmten Abschnitte 26 und 28 durch Ausnutzung des Coanda-Effekts fortgeführt wird.

Um Verwirbelungen des Luftstroms zu vermeiden sind ferner die Übergänge zwischen den einzelnen Abschnitten 26 und 28 abgerundet ausgebildet.

Fig. 2 zeigt ferner, wie die Ablenkung eines austretenden Luftstroms zur Ablenkung in Blickrichtung auf Fig. 2 nach unten und auf die linke Seite erfolgen kann. Hierzu wird über die in Fig. 2 nicht dargestellten Anschlüsse 40 und 42 Luft in die Kammern 36 und 38 zur Erzeugung von Überdruck und Unterdruckbereichen eingebracht bzw. abgeführt. Dies wird schematisch durch die Pfeile 60 angedeutet, welche ausströmende Luft aus den Öffnungen 30, 32 und 34 darstellen. Selbstverständlich strömt die Luft nicht nur aus den bezeichneten Öffnungen 30, 32 und 34, sondern aus allen einer Kammer zugeordneten Öffnungen 30, 32 und 34. Entsprechend wird die Luft, wie durch die Pfeile 62 angedeutet, auch durch alle Öffnungen 30, 32 und 34 der Kammern 36 und 38 abgeführt.

Aus der Darstellung von Fig. 2 ist ersichtlich, dass neben der Ausnutzung des Coanda-Effekts zur Ablenkung des austretenden Luftstroms aus der Luftaustrittsöffnung 18 das Einbringen von Luft und das Abführen von Luft den Luftstrom in der gewünschten Weise beeinflussen. Der Grad der Ablenkung kann ferner durch den Betrag der ausströmenden und abgeführten Luft eingestellt werden. Anders als in Fig. 2 dargestellt, können aber auch beispielsweise die beiden gegenüberliegenden Bereiche 26 und der rechte Abschnitt 28 zum Ausbilden von Überdruckbereichen durch Einbringen von Luft über die Öffnungen 30, 32 und 34 dienen, wobei sich durch zusätzliches Ausbilden eines Unterdruckbereichs auf der linken Seite in dem linken Abschnitt 28 eine Ablenkung eines austretenden Luftstrom nach links ergibt. Die vier gezeigten Abschnitte 26 und 28 können unabhängig voneinander gesteuert werden, so dass sowohl das Zu- oder Abführen von Luft sowie die Stärke des Zu- oder Abführens von Luft für jede Kammer 36 und 38 durch die zweiten Anschlüsse 40 und 42 unabhängig voneinander einstellbar ist.

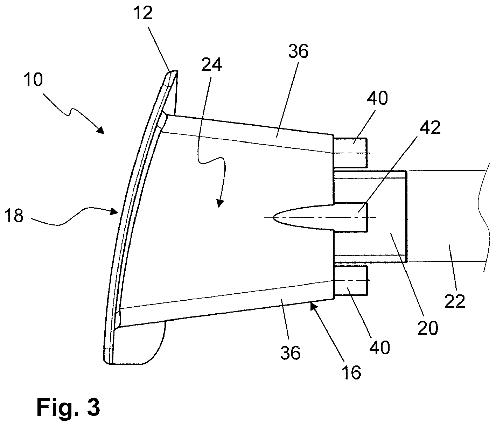

Fig. 3 zeigt eine schematische Darstellung eines Luftausströmers 10 in einer Seitenansicht. Der in Fig. 3 dargestellte Luftausströmer 10 ist eine Seitenansicht des in Fig. 1 und 2 gezeigten Luftausströmers 10. In Fig. 3 ist schematisch ein Luftzuführkanal 22 dargestellt, der mit dem ersten Anschluss 20 des Luftausströmers 10 verbunden ist. Es sind ferner die beiden zweiten Anschlüsse 40 zu einer oberen Kammer 36 und einer unteren Kammer 36 sowie ein zweiter Anschluss 42 zu einer Kammer 38 dargestellt. Die zweiten Anschlüsse 40 und 42 sind beispielsweise mit einem Schlauch verbunden, der zu einem Ventil einer weiteren Einrichtung führt, die das Zu- und Abführen von Luft zu den jeweiligen zweiten Anschlüssen 40 und 42 zur Erzeugung von Über- und Unterdruck in den Kammern 36 und 38 und den Bereichen der Abschnitte 26 und 28 mit den Öffnungen 30, 32 und 34 steuert.

In Fig. 3 sind die Kammern 36 schematisch angedeutet. Die Kammern 36 weisen daher keinen geraden Abschnitt auf, wie es in Fig. 3 den Anschein macht, sondern weisen innenliegend (in dem Gehäuse 16) konvex gekrümmte Abschnitte 26 und 28 auf.

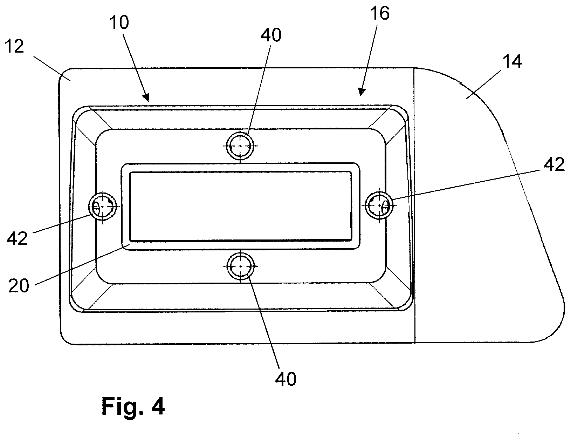

Fig. 4 zeigt eine schematische Darstellung eines Luftausströmers 10 mit Blick auf einen Anschluss 20 für einen Luftzuführkanal 22. Die Rückansicht eines Luftausströmers 10 von Fig. 4 zeigt den bereits mit Bezug auf die Fig. 1 bis 3 gezeigten Luftausströmer 10 mit Blick auf den ersten Anschluss 20 und die zweiten Anschlüsse 40 und 42.

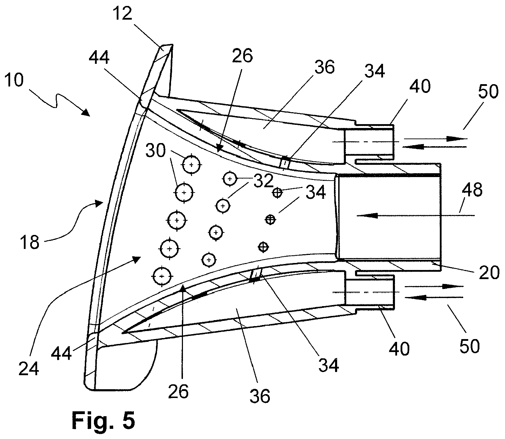

Fig. 5 zeigt eine schematische, teilweise geschnittene Darstellung eines Luftausströmers 10 in einer Seitenansicht. Der in Fig. 5 dargestellte Luftausströmer 10 zeigt eine Schnittansicht, wobei der Luftausströmer 10 eine Darstellung des in den Fig. 1 bis 4 gezeigten Luftausströmers 10 zeigt.

In Fig. 5 ist die konvexe Krümmung der Abschnitte 26 gezeigt. Die Abschnitte 28 weisen eine entsprechende Krümmung auf, jedoch ist deren Krümmung in Fig. 5 nicht ersichtlich. Die Bereiche 44 der Blende 12, die die Luftaustrittsöffnung 18 abschließen, sind abgerundet. Anders als in Fig. 5 dargestellt, kann jedoch eine exakte Fortführung der konvexen Krümmung der Abschnitte 26 und entsprechend eine Fortführung der konvexen Krümmung der Abschnitte 44 und 46 durch die Bereiche 46 bereitgestellt sein.

In Fig. 5 sind die Öffnungen 30, 32 und 34 eines Abschnitts 28 dargestellt. Die drei gezeigten Reihen mit den Öffnungen 30, 32 und 34 verlaufen in Blickrichtung auf Fig. 5 nicht entlang einer vertikalen Linie, sondern sind im Wesentlichen parallel zu einer abschließenden Kante durch die Blende 12 ausgebildet. Fig. 5 zeigt hierbei deutlich, dass die Durchmesser der Öffnungen 30, 32 und 34 ausgehend von dem ersten Anschluss 20 zu der Luftaustrittsöffnung 18 hin zunehmen.

Dem Luftausströmer 10 wird über einen nicht dargestellten Luftzuführkanal 22 Luft zugeführt (dargestellt durch Pfeil 48) und über die zweiten Anschlüsse 40 wird gesondert Luft zu- und abgeführt (dargestellt durch die Pfeile 50), um den austretenden Luftstrom in der gewünschten Weise abzulenken.

Die Ausgestaltung eines Luftausströmers 10, wie in den Figuren gezeigt, weist den Vorteil auf, dass keine Komponenten zum Ablenken des Luftstroms in den Strömungskanal 24 ragen, so dass es auch zu einer Reduzierung von störenden Geräuschen, welche bei konventionellen Luftausströmern auf Grund der in den Strömungskanal ragenden Komponenten auftritt, und zu keinen Verwirbelungen der ausströmenden Luft kommt.

Durch Fig. 5 ist ferner ersichtlich, dass die zu- oder abgeführte Luft aus den Kammern 36 und in entsprechender Weise aus den Kammern 38 über die Öffnungen 30, 32 und 34 erfolgt.

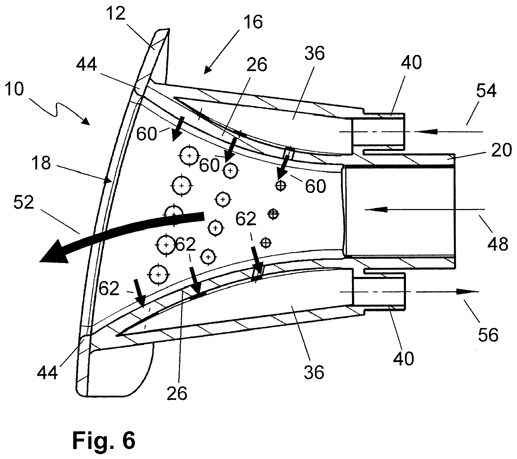

Fig. 6 zeigt eine weitere schematische, teilweise geschnittene Darstellung eines Luftausströmers 10 in einer Seitenansicht. Diese Seitenansicht zeigt in einer Ausführung, wie ein Luftstrom nach unten abgelenkt werden kann. Der Luftausströmer 10 von Fig. 6 ist eine Schnittansicht der bereits mit Bezug auf die Fig. 1 bis 5 beschriebenen und gezeigten Luftausströmer 10. Um den Luftstrom (dargestellt durch Pfeil 48) aus der Luftaustrittsöffnung 18 nach unten abzulenken (dargestellt durch Pfeil 52) wird in die obere Kammer 36 über den zweiten Anschluss 40 Luft zugeführt (dargestellt durch Pfeil 54).

Dazu wird der unteren Kammer 36 über den zweiten Anschluss 40 Luft abgeführt (dargestellt durch Pfeil 56). Hierbei kommt es zu einem Überdruckbereich in der oberen Kammer 36 sowie dem Abschnitt 26 mit den Öffnungen 30, 32 und 34 und zu einem Unterdruckbereich in der unteren Kammer 36 sowie dem Abschnitt 26 mit den Öffnungen 30, 32 und 34. Über die Pfeile 60 und 62 ist angedeutet, wie die Beeinflussung des ausströmenden Luftstroms durch Zuführen oder Abführen von Luft in die Kammern 36 (und entsprechend 38) erfolgen kann.

Der in der Figurenbeschreibung gezeigte und beschriebene Luftausströmer 10 eignet sich dazu, geräuschlos und ohne eine Vielzahl von Einstellmitteln, welche in einem Strömungskanal angeordnet sind, einen Luftstrom auf Grund des Coanda-Effekts durch die gekrümmte Ausführung der Abschnitte 26 und 28 und der Erzeugung von Überdruck- und Unterdruckbereichen in den Kammern 36 und 38 sowie den Abschnitten 26 und 28 mit den Öffnungen 30, 32 und 34 beliebig abzulenken.

### Bezugszeichenliste

- 10: Luftausströmer
- 12: Blende
- 14: Blendenanschluss
- 16: Gehäuse
- 18: Luftaustrittsöffnung
- 20: erster Anschluss
- 22: Luftzuführkanal
- 24: Strömungskanal
- 26: Abschnitt
- 28: Abschnitt
- 30: Öffnung
- 32: Öffnung
- 34: Öffnung
- 36: Kammer
- 38: Kammer
- 40: zweiter Anschluss
- 42: zweiter Anschluss
- 44: Bereich
- 46: Bereich
- 48: Pfeil
- 50: Pfeil
- 52: Pfeil
- 54: Pfeil
- 56: Pfeil
- 60: Pfeil
- 62: Pfeil

## Patentansprüche

1. Luftausströmer (10), aufweisend ein Gehäuse (16) mit einer Luftaustrittsöffnung (18), einen ersten Anschluss (20) an einem Luftzuführkanal (22) und einen durchgehenden Strömungskanal (24), wobei der Strömungskanal (24) mindestens an zwei gegenüberliegenden Abschnitten (26; 28) derart gekrümmt ausgebildet ist, dass sich der Querschnitt des Strömungskanals (24) zu der Luftaustrittsöffnung (18) hin vergrößert, und die mindestens zwei Abschnitte (26; 28) jeweils Öffnungen (30, 32, 34) aufweisen, welche jeweils in eine hinter den Abschnitten (26; 28) liegende Kammer (36; 38) münden, wobei die Kammern (36; 38) jeweils einen von dem ersten Anschluss (20) getrennten zweiten Anschluss (40; 42) zum Zuführen oder Abführen von Luft zur Erzeugung von Überdruck und/oder Unterdruck aufweisen, und wobei die Abschnitte (26, 28) mehrere Reihen von Öffnungen (30, 32, 34) aufweisen.

2. Luftausströmer (10) nach Anspruch 1, wobei das Gehäuse (16) vier gekrümmte Abschnitte (26, 28) mit Öffnungen (30, 32, 34) aufweist, wobei sich jeweils zwei Abschnitte (26; 28) gegenüberliegen und die vier Abschnitte (26, 28) einen im Querschnitt rechteckigen Strömungskanal (24) bilden und jeder Abschnitt (26, 28) eine separate Kammer (36, 38) mit einem zweiten Anschluss (40, 42) zum Zuführen oder Abführen von Luft aufweist.

3. Luftausströmer (10) nach Anspruch 1 oder 2, wobei die Öffnungen (30, 32, 34) zu der Luftaustrittsöffnung (18) hin einen zunehmend größeren Durchmesser aufweisen.

4. Luftausströmer (10) nach einem der Ansprüche 1 bis 3, wobei die Abschnitte (26, 28) eine konvexe Krümmung aufweisen.

5. Luftausströmer (10) nach einem der Ansprüche 1 bis 4, wobei die Öffnungen (30, 32, 34) einen runden Querschnitt aufweisen.

6. Luftausströmer (10) nach einem der Ansprüche 1 oder 3 bis 5, wobei der Strömungskanal (24) eine gerade Anzahl von Abschnitten mit Öffnungen (30, 32, 34) aufweist, welche einen im Querschnitt runden Strömungskanal bilden, wobei jeder Abschnitt eine separate Kammer mit einem zweiten Anschluss zum Zuführen oder Abführen von Luft aufweist.

7. Luftausströmer (10) nach einem der Ansprüche 1 bis 6, aufweisend eine die Luftaustrittsöffnung (18) umgebende Blende (12), welche in den an der Luftaustrittsöffnung (18) anliegenden Bereichen (44, 46) eine den Abschnitten (26, 28) entsprechende Krümmung aufweist.

8. Luftausströmer (10) nach einem der Ansprüche 1 bis 7, wobei der Strömungskanal (24) und der Luftzuführkanal (22) im Bereich des ersten Anschlusses (20) einen gleichen Querschnitt aufweisen.

9. Luftausströmer (10) nach einem der Ansprüche 1 bis 8, wobei der Luftzuführkanal (22) vor dem ersten Anschluss (20) mindestens eine Strecke aufweist, die einen geradlinigen Luftstrom in den Strömungskanal (24) bereitstellt.

10. Luftausströmer (10) nach einem der Ansprüche 1 bis 9, wobei die separate Zuführung von Luft in die Kammern (36, 38) der Abschnitte (26, 28) über die zweiten Anschlüsse (40, 42) über eine Steuerung einstellbar und veränderbar ist.

11. Luftausströmer (10) nach einem der Ansprüche 1 bis 10, wobei die Abschnitte (26, 28) des Strömungskanals (24) mit den Öffnungen (30, 32, 34) aus einem flexiblen Material bestehen.

12. Luftausströmer (10) nach einem der Ansprüche 1 bis 11, wobei der Luftausströmer (10) aus Kunststoff besteht.

13. Luftausströmer (10) nach einem der Ansprüche 1 bis 12, wobei die zweiten Anschlüsse (40, 42) der Kammern (36, 38) rückseitig, der Luftaustrittsöffnung (18) abgewandt, mit einer Einrichtung zum Zuführen und/oder Abführen von Luft zum Erzeugen eines Überdrucks und/oder eines Unterdrucks in den Kammern (36, 38) verbindbar sind.

14. Luftausströmer (10) nach einem der Ansprüche 1 bis 13, wobei an einer die Luftaustrittsöffnung (18) umgebenden Blende (12) ein Einstellmittel angeordnet ist, nach Maßgabe dessen die Richtung, die Ablenkung und/oder die Menge der ausströmenden Luft steuerbar ist.

15. Luftausströmer (10) nach einem der Ansprüche 1 bis 14, wobei in dem Luftzuführkanal (22) eine Schließeinrichtung vorgesehen ist, welche dazu ausgebildet ist, die Luftzufuhr in den Strömungskanal (24) freizugeben, zu unterbinden und die Menge der zugeführten Luft zu regulieren.

16. Luftausströmer (10) nach Anspruch 15, wobei die Schließeinrichtung über ein Stellmittel steuerbar ist, welches an einer die Luftaustrittsöffnung (18) umgebenden Blende (12) angeordnet ist.

17. Luftausströmer (10) nach einem der Ansprüche 1 bis 16, wobei die Luftzufuhr und die Luftabfuhr in die Kammern (36, 38) regulierbar ist.

18. Luftausströmer (10) nach einem der Ansprüche 1 bis 17, wobei die Kammern (36, 38) in mindestens zwei Teilkammern unterteilt sind und entweder jeweils einen separaten zweiten Anschluss aufweisen oder mindestens ein Trennmittel aufweisen, mittels welchem das Volumen der so gebildeten Teilkammern veränderbar ist.

## Claims

1. Air vent (10) comprising a housing (16) with an air outlet opening (18), a first connection (20) to an air supply channel (22) and a continuous flow channel (24), wherein the flow channel (24) is formed to be so curved at at least two opposite sections (26; 28) that the cross-section of the flow channel (24) increases towards the air outlet opening (18), and the at least two sections (26; 28) each have openings (30, 32, 34) which each open into a respective chamber (36, 38) lying behind the sections (26; 28), wherein the chambers (36; 38) each have a second connection (40; 42), which is separated from the first connection (20), for supplying or removing air so as to generate an overpressure and/or a vacuum and wherein the sections (26, 28) have a plurality of rows of openings (30, 32, 34).

2. Air vent (10) according to claim 1, wherein the housing (16) has four curved sections (26; 28) with openings (30, 32, 34), wherein each two sections (26; 28) are opposite one another and the four sections (26, 28) form a flow channel (24) of rectangular cross-section, each section (26, 28) having a separate chamber (36, 38) with a second connection (40, 42) for the supply or removal of air.

3. Air vent (10) according to claim 1 or 2, wherein the openings (30, 32, 34) have an increasingly greater diameter in direction towards the air outlet opening (18).

4. Air vent (10) according to any one of claims 1 to 3, wherein the sections (26, 28) have a convex curvature.

5. Air vent (10) according to any one of claims 1 to 4, wherein the openings (30, 32, 34) have a round cross-section.

6. Air vent (10) according to any one of claims 1 and 3 to 5, wherein the flow channel (24) has an even number of sections with openings (30, 32, 34), which form a flow channel of round cross-section, each section having a separate chamber with a second connection for the supply or removal of air.

7. Air vent (10) according to any one of claims 1 to 6, comprising a surround (12), which surrounds the air outlet opening (18) and which in the regions (44, 46) adjoining the air outlet opening (18) has a curvature corresponding with the sections (26, 28).

8. Air vent (10) according to any one of claims 1 to 7, wherein the flow channel (24) and the air feed channel (22) have the same cross-section in the region of the first connection (20).

9. Air vent (10) according to any one of claims 1 to 8, wherein the air supply channel (22) has in front of the first connection (20) at least one path providing rectilinear air flow in the flow channel (24).

10. Air vent (10) according to any one of claims 1 to 9, wherein the separate supply of air to the chambers (36, 38) of the sections (26, 28) by way of the second connections (40, 42) is settable and variable via a control.

11. Air vent (10) according to any one of claims 1 to 10, wherein the sections (26, 28) of the flow channel (24) with the openings (30, 32, 34) consist of a flexible material.

12. Air vent (10) according to any one of claims 1 to 11, wherein the air vent (10) consists of plastics material.

13. Air vent (10) according to any one of claims 1 to 12, wherein the second connections (40, 42) of the chambers (36, 38) are connectible at the rear side remote from the air outlet opening (18) with a device for supplying and/or removing air for generating an overpressure and/or a vacuum in the chambers (36, 38).

14. Air vent (10) according to any one of claims 1 to 13, wherein setting means in accordance with which the direction, deflection and/or amount of outflowing air is or are controllable are arranged at a surround (12) surrounding the air outlet opening (18).

15. Air vent (10) according to any one of claims 1 to 14, wherein a closure device constructed to allow or prevent air supply to the flow channel (24) and to regulate the amount of supplied air is provided in the air supply channel (22).

16. Air vent (10) according to claim 15, wherein the closure device is controllable by way of setting means arranged at a surround (12) surrounding the air outlet opening (18).

17. Air vent (10) according to any one of claims 1 to 16, wherein the air supply to and the air removal from the chambers (36, 38) can be regulated.

18. Air vent (10) according to any one of claims 1 to 17, wherein the chambers (36, 38) are divided into at least two sub-chambers and either each have a separate second connection or each have at least one separating means by way of which the volume of the thus-formed sub-chambers is variable.

## Revendications

1. Diffuseur d'air (10), présentant un boîtier (16) avec une ouverture de sortie d'air (18), un premier raccord (20) au niveau d'un canal d'amenée d'air (22) et un canal d'écoulement continu (24), dans lequel le canal d'écoulement (24) est réalisé courbé au moins au niveau de deux sections opposées (26 ; 28) de telle sorte que la section transversale du canal d'écoulement (24) augmente en direction de l'ouverture de sortie d'air (18), et les au moins deux sections (26 ; 28) présentent respectivement des ouvertures (30, 32, 34), lesquelles débouchent respectivement dans une chambre (36 ; 38) située derrière les sections (26 ; 28), dans lequel les chambres (36 ; 38) présentent respectivement un deuxième raccord (40 ; 42) séparé du premier raccord (20) pour l'amenée ou l'évacuation d'air pour la génération de surpression et/ou dépression, et dans lequel les sections (26, 28) présentent plusieurs rangées d'ouvertures (30, 32, 34).

2. Diffuseur d'air (10) selon la revendication 1, dans lequel le boîtier (16) présente quatre sections courbées (26, 28) avec des ouvertures (30, 32, 34), dans lequel respectivement deux sections (26 ; 28) se font face et les quatre sections (26, 28) forment un canal d'écoulement à section transversale rectangulaire (24) et chaque section (26, 28) présente une chambre séparée (36, 38) avec un deuxième raccord (40, 42) pour l'amenée et l'évacuation d'air.

3. Diffuseur d'air (10) selon la revendication 1 ou 2, dans lequel les ouvertures (30, 32, 34) présentent un diamètre de plus en plus grand en direction de l'ouverture de sortie d'air (18).

4. Diffuseur d'air (10) selon l'une quelconque des revendications 1 à 3, dans lequel les sections (26, 28) présentent une courbure convexe.

5. Diffuseur d'air (10) selon l'une quelconque des revendications 1 à 4, dans lequel les ouvertures (30, 32, 34) présentent une section transversale ronde.

6. Diffuseur d'air (10) selon l'une quelconque des revendications 1 ou 3 à 5, dans lequel le canal d'écoulement (24) présente un nombre pair de sections avec des ouvertures (30, 32, 34), lesquelles forment un canal d'écoulement à section transversale ronde, dans lequel chaque section présente une chambre séparée avec un deuxième raccord pour l'amenée ou l'évacuation d'air.

7. Diffuseur d'air (10) selon l'une quelconque des revendications 1 à 6, présentant un écran (12) entourant l'ouverture de sortie d'air (18), lequel présente une courbure correspondant aux sections (26, 28) dans les zones (44, 46) s'appuyant sur l'ouverture de sortie d'air (18).

8. Diffuseur d'air (10) selon l'une quelconque des revendications 1 à 7, dans lequel le canal d'écoulement (24) et le canal d'amenée d'air (22) présentent dans la zone du premier raccord (20) une section transversale identique.

9. Diffuseur d'air (10) selon l'une quelconque des revendications 1 à 8, dans lequel le canal d'amenée d'air (22) présente avant le premier raccord (20) au moins un trajet, qui met à disposition un flux d'air rectiligne dans le canal d'écoulement (24).

10. Diffuseur d'air (10) selon l'une quelconque des revendications 1 à 9, dans lequel l'amenée séparée d'air dans les chambres (36, 38) des sections (26, 28) est réglable et modifiable par le biais des deuxièmes raccords (40, 42) via une commande.

11. Diffuseur d'air (10) selon l'une quelconque des revendications 1 à 10, dans lequel les sections (26, 28) du canal d'écoulement (24) avec les ouvertures (30, 32, 34) sont constituées d'un matériau flexible.

12. Diffuseur d'air (10) selon l'une quelconque des revendications 1 à 11, dans lequel le diffuseur d'air (10) est constitué de plastique.

13. Diffuseur d'air (10) selon l'une quelconque des revendications 1 à 12, dans lequel les deuxièmes raccords (40, 42) des chambres (36, 38) peuvent être reliés face arrière, de manière opposée à l'ouverture de sortie d'air (18), à un dispositif d'amenée et/ou d'évacuation d'air pour la génération d'une surpression et/ou d'une dépression dans les chambres (36, 38).

14. Diffuseur d'air (10) selon l'une quelconque des revendications 1 à 13, dans lequel un moyen de réglage est agencé au niveau d'un écran (12) entourant l'ouverture de sortie d'air (18), selon lequel la direction, la déviation et/ou la quantité d'air évacué peut être commandée.

15. Diffuseur d'air (10) selon l'une quelconque des revendications 1 à 14, dans lequel un dispositif de fermeture est prévu dans le canal d'amenée d'air (22), lequel est réalisé pour libérer l'amenée d'air dans le canal d'écoulement (24), pour l'empêcher et pour réguler la quantité d'air amené.

16. Diffuseur d'air (10) selon la revendication 15, dans lequel le dispositif de fermeture peut être commandé par le biais d'un moyen de réglage, lequel est agencé au niveau d'un écran (12) entourant l'ouverture de sortie d'air (18).

17. Diffuseur d'air (10) selon l'une quelconque des revendications 1 à 16, dans lequel l'amenée d'air et l'évacuation d'air peuvent être régulées dans les chambres (36, 38).

18. Diffuseur d'air (10) selon l'une quelconque des revendications 1 à 17, dans lequel les chambres (36, 38) sont subdivisées en au moins deux chambres partielles et soit présentent respectivement un deuxième raccord séparé soit présentent au moins un moyen de séparation, au moyen duquel le volume des chambres partielles ainsi formées est modifiable.
